# EUROPÄISCHE PATENTSCHRIFT

(11) **EP 1 931 976 B1**
(45) Veröffentlichungstag und Bekanntmachung des Hinweises auf die Patenterteilung: **21.12.2016**
(21) Anmeldenummer: 06792298.9
(22) Anmeldetag: 28.09.2006
(51) Int. Cl.: G01N 23/203, G01N 23/223

(54) **VORRICHTUNG UND VERFAHREN ZUR SCHNELL- ODER ONLINE-BESTIMMUNG DER KOMPONENTEN EINES ZWEI- ODER MEHRSTOFFSYSTEMS**
PROCESS AND DEVICE FOR FAST OR ON-LINE DETERMINATION OF THE COMPONENTS OF A TWO-COMPONENT OR MULTIPLE-COMPONENT SYSTEM
DISPOSITIF ET PROCÉDÉ DE DÉTERMINATION RAPIDE OU EN CONTINU DES COMPOSANTS D'UN SYSTÈME À AU MOINS DEUX CONSTITUANTS

(30) Priorität: 29.09.2005 DE 102005046878
(43) Veröffentlichungstag der Anmeldung: 18.06.2008
(73) Patentinhaber: Katz, Elisabeth, 72226 Simmersfeld (DE)
(72) Erfinder: KLEIN, Albert, 72226 Simmersfeld (DE)
(74) Vertreter: Schön, Thilo
(86) Internationale Anmeldenummer: PCT/EP2006/009413
(87) Internationale Veröffentlichungsnummer: WO 2007/036359

(56) Entgegenhaltungen:
- US-B1- 6 496 562
- ARIKAN P ET AL: "Determination of high-Z materials in low-Z medium by X-ray scattering techniques" NUCLEAR INSTRUMENTS & METHODS IN PHYSICS RESEARCH, SECTION - B: BEAM INTERACTIONS WITH MATERIALS AND ATOMS, ELSEVIER, AMSTERDAM, NL, Bd. 95, Nr. 1, Januar 1995 (1995-01), Seiten 82-86, XP004010787 ISSN: 0168-583X
- KIERZEK ET AL: "Assessment of coal and ash environmental impact with the use of gamma- and X-ray spectrometry" JOURNAL OF RADIOANALYTICAL AND NUCLEAR CHEMISTRY, Bd. 240, Nr. 1, April 1999 (1999-04), Seiten 39-45, XP002417061
- YAZDI M ET AL: "Dual-energy gamma-ray technique for quantitative measurement of coal ash in the Shahroud mine, Iran" INTERNATIONAL JOURNAL OF COAL GEOLOGY, ELSEVIER, Bd. 55, Nr. 2-4, August 2003 (2003-08), Seiten 151-156, XP002389084 ISSN: 0166-5162

## Beschreibung

### Technisches Gebiet der Erfindung

Die Erfindung betrifft ein Verfahren zur Schnell- oder Online-Bestimmung des Aschegehalts von Kohle oder von Papierbahnen nach dem Oberbegriff des Anspruchs 1 sowie eine Vorrichtung zur Durchführung dieses Verfahrens nach Anspruch 4.

Im Bergwerk- und Hüttenwesen stellt sich häufig das Problem, dass der Aschegehalt von Kohle, Koks und dergleichen ständig (Online) oder in geringen Zeitabständen bestimmt werden muss. Insbesondere bei Online-Messungen werden hierzu häufig radiometrische Methoden eingesetzt. Die verbreitetste Messmethode hierzu ist die sogenannte Dual-Energy-Methode, bei der das Messgut mit Röntgen- oder Gammastrahlen unterschiedlicher Energie durchstrahlt wird. Zumeist wird hierzu eine Cs¹³⁷-Quelle mit einer Photonenenergie von 600 keV und eine Am²⁴¹-Quelle mit einer Photonenenergie von ca. 60 keV eingesetzt. Die Abschwächung der beiden Strahlen beim Durchgang durch die zu messende Substanz wird gemessen und hierdurch auf die mittlere Dichte und die mittlere Ordnungszahl geschlossen. Bei konstanter Zusammensetzung der Asche kann aus dieser Information der Aschegehalt errechnet werden.

### Stand der Technik

Aus der G 89 13 238.6 ist eine Vorrichtung und ein Verfahren zur Bestimmung des Aschegehalts von Kohle bekannt, bei der zusätzlich zur oben erwähnten Dual-Energy-Methode die an der Probe rückgestreute Strahlung der Am²⁴¹-Quelle gemessen wird. Es wird hierbei ein Strahlungsdetektor eingesetzt, dessen Auflösung hoch genug ist, um den elastisch rückgestreuten Anteil (Rayleigh-Streuung) vom inelastischen Anteil der Streuung (Compton-Streuung) zu unterscheiden. Aufgrund der Z-Abhängigkeit der Compton-Streuung lassen sich aus dem Verhältnis zwischen Compton- und Rayleigh-Peak ebenfalls Rückschlüsse auf den Aschegehalt ziehen, so dass die Genauigkeit der Dual-Energy-Messung verbessert werden kann.

Ein Nachteil der hier vorgeschlagenen Vorrichtung besteht im hohen apparativen Aufwand sowie - insbesondere aufgrund der Cs¹³⁷-Quelle - der notwendigen Strahlenschutzmaßnahmen. Ferner wird hier lediglich mit 2 verschiedenen Methoden die mittlere Ordnungszahl bestimmt, so daß der Zuwachs an Information begrenzt ist.

Aus "Determination of high-Z materials in low-Z medium by X-ray scattering techniques" NUCLEAR INSTRUMENTS & METHODS WITH MATERIALS AND ATOMS, ELSEVIER, AMSTERDAM, NL, Bd. 95, Nr. 1, Januar 1995 (1995-01), Seiten 82-86, XP004010787 ISSN: 0168-583X ist es bekannt, eine Kohleprobe mit einem monochromatischen Röntgenstrahl mit einer Energie zwischen 22 und 25 keV zu bestrahlen und mittels eines Detektors sowohl die rückgestreuten Compton- und Rayleigh-Peaks als auch die K_{α}-und K_{β}-Fluoreszenzpeaks des in der Asche der Kohle enthaltenen Eisens zu messen. Bei gleichbleibender Aschezusammensetzung lässt sich somit recht genau der Aschegahalt der Kohle messen.

### Gegenstand der Erfindung

Hiervon ausgehend ist es Aufgabe der Erfindung, eine gattungsgemäße Vorrichtung und ein gattungsgemäßes Verfahren zur automatischen Schnell- oder Online-Bestimmung des Aschegehalts von Kohle oder von Papierbahnen derart weiterzubilden, dass auch bei schwankender Aschezusammensetzung gute Messergebnisse erzielt werden können.

Diese Aufgabe wird durch eine Verfahren mit den Merkmalen des Anspruchs 1 bzw. durch eine Vorrichtung mit den Merkmalen des Anspruchs 4 gelöst.

Beim erfindungsgemäßen Verfahren bzw. bei der erfindungsgemäßen Vorrichtung wird eine mit relativ geringer Beschleunigungsspannung betriebene Röntgenröhre eingesetzt und in Rückstreurichtung das rückgestreute bzw. emittierte Spektrum der Substanz mit einem hochauflösenden Strahlungsdetektor gemessen. Der Energiebereich des Spektrums wird hierbei so gewählt, dass im betrachteten Intervall sowohl K_{α}- und/oder K_{β}-Linien interessierender Elemente - insbesondere Aluminium, Silizium, Phosphor, Schwefel, Kalium, Kalzium, Titan, Mangan, Kobalt und Eisen - als auch ein Rayleigh- und der hierzu gehörende Compton-Peak des Anodenmaterials der Röntgenröhre liegen. Die K_{α}-Linien der eben aufgezählten Elemente liegen im Energiebereich zwischen 1 und 7 keV, so dass eine Beschleunigungsspannung zwischen 10 und 50 kV, vorzugsweise zwischen 10 und 20 kV geeignet ist. Als Anodenmaterial ist insbesondere Kupfer geeignet, da die K_{α}-Linie von Kupfer eine Energie von ca. 8 keV aufweist, sich also unmittelbar an das K_{α}-Energiefenster von Aluminium bis Nickel anschließt.

Zur Bestimmung der Komponenten der Substanz werden zum einen die Intensitäten von Compton- und dem Rayleigh-Peak der eingestrahlten Röntgenstrahlung und weiterhin die Intensitäten von allen oder einzelnen Fluoreszenz-Emissionspeaks der Substanz bestimmt. Das vorzugsweise benutzte Verhältnis zwischen Compton- und Rayleigh-Peak ist vergleichsweise Störgrößen-unabhängig, da die beiden Linien fast die gleiche Energie haben und somit in gleicher Weise durch Störgrößen, z.B. den Photoeffekt, beeinflußt werden, und lässt einen unmittelbaren Schluss auf die mittlere Ordnungszahl der Substanz zu. Bei weiterer Kenntnis des qualitativen oder nach entsprechender Kalibrierung des quantitativen Fluoreszenz-Spektrums lässt sich somit eine sehr genaue Schnellanalyse erzielen. Das Verfahren ist insbesondere zur Bestimmung des Aschegehalts von Kohle geeignet.

Das Verfahren hat insbesondere den Vorteil, dass man mit nur einer Strahlungsquelle und einem Strahlungsdetektor auskommt, und dass die Strahlungsquelle eine Röntgenröhre mit relativ geringer Beschleunigungsspannung sein kann.

Die Erfindung wird nun anhand eines Ausführungsbeispiels näher erläutert. Hierbei zeigen:

### Kurzbeschreibung der Zeichnungen

- Figur 1: Eine schematische Darstellung einer Vorrichtung zur Online-Messung des Aschegehalts von Kohle,
- Figur 2: ein typisches, mit dem Strahlungsdetektor in Figur 1 aufgezeichnetes Spektrum und
- Figur 3: einen Ausschnitt aus dem Sepktrum aus Figur 2.

### Beschreibung bevorzugter Ausführungsformen

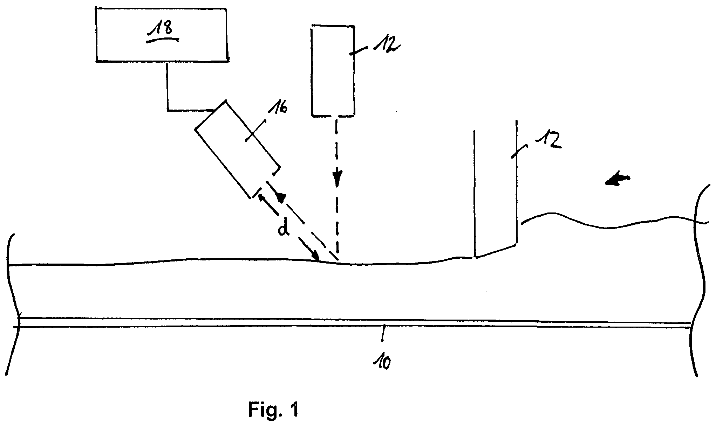

Figur 1 zeigt schematisch eine Vorrichtung zur Online-Bestimmung des Aschegehalts eines auf einem Förderband 10 geförderten Kohlestroms K.

Zunächst wird die Oberfläche des Kohlestroms K durch den Pflug 12 eingeebnet, wobei jedoch aufgrund der Korngröße auch nach dem Pflug noch Oberflächenschwankungen auftreten. Die Messeinrichtung besteht aus der oberhalb des Förderbandes 10 angeordneten Röntgenröhre 14, dem ebenfalls oberhalb des Förderbands 10 in einer Rückstreugeometrie angeordneten Strahlungsdetektor 16 und der mit dem Detektor verbundenen Auswerteeinheit 18.

Die Röntgenröhre 14 wird im folgenden Beispiel mit einer Beschleunigungsspannung zwischen 10 und 20 kV betrieben und enthält eine Kupferanode. Die Einstrahlrichtung steht senkrecht zur Oberfläche des Förderbandes 10. Die Achse des Strahlungsdetektors 16 steht etwa im 45°-Winkel zur Einstrahlrichtung der Röntgenröhre 14; der Abstand d des Strahlungsdetektors von der Oberfläche des Kohlestroms K beträgt vorzugsweise etwa 10cm. Der Strahlungsdetektor 16 ist ein Silizium-Driftdetektor mit einer Auflösung von ca. 160 eV. Vom Strahlungsdetektor 16 und der Auswerteeinheit 18 wird ein Röntgenspektrum im Bereich zwischen 1 und 10 keV erfasst und ausgewertet.

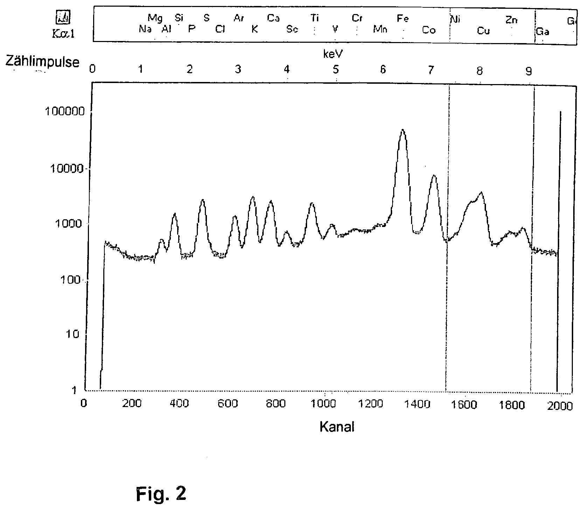

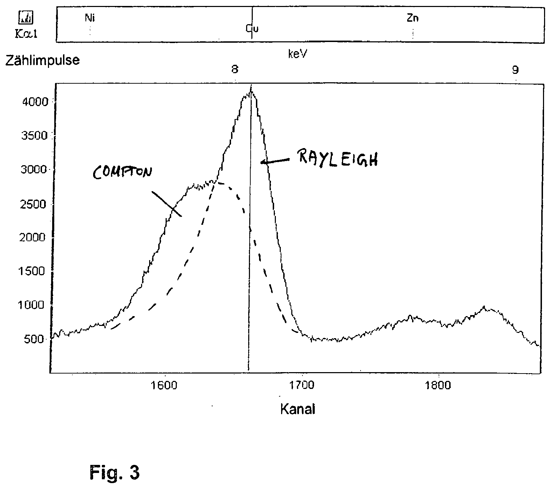

Die Figur 2 zeigt ein typisches Spektrum, wie es vom Strahlungsdetektor 16 aufgezeichnet wird; Figur 3 zeigt einen Ausschnitt hiervon im Bereich von ca. 7,5 bis 9 keV. Man erkennt neben den K_{α}-Peaks verschiedener Elemente-Aluminium, Silizium, Schwefel, Argon (ist Bestandteil der Umgebungsluft), Kalium, Kalzium, Selen, Titan, Vanadium, Eisen und Kobalt. Weiterhin ist die K_{α}-Linie des Kupfers zu sehen, diese resultiert jedoch nicht aus einem Kupferanteil der geförderten Kohle, sondern ist das rückgestreute Signal der Kupferanode. Mit Blick auf die Figur 3 sieht man, dass sich bei geeigneter Auflösung der Rayleigh-Anteil vom Compton-Anteil des Kupferpeaks trennen lässt. Das Verhältnis dieser beiden Anteile hängt von der mittleren Ordnungszahl des Materials an dem gestreut wird, hier also des Kohlestroms K, ab, siehe hierzu beispielsweise DE-OS 2920364.

Kennt man die genaue Zusammensetzung der Asche der Kohle (die Aschebildner haben sämtlich ein höheres Z als Kohlenstoff), so lässt sich allein aus dem Verhältnis zwischen Rayleigh- und Compton-Anteil der Aschegehalt bestimmen. Die Zusammensetzung der Asche schwankt jedoch, weshalb zusätzlich der niederenergetische Teil des Spektrums betrachtet wird, welches die K_{α}-Linien der wesentlichen Aschebildner beinhaltet. Sofern die Luftabsorption keine dominierende Rolle mehr spielt - dies ist bei Abstandsschwankungen unter 20% bei einer Photonenenergie oberhalb 2 keV der Fall - lässt sich aus den Intensitätsverhältnissen der K_{α}-Peaks unmittelbar auf die Zusammensetzung der Asche schließen. Man muss also auch hier keine Absolutmessung machen, was aufgrund des schwankenden Abstands zwischen Probenoberfläche und Strahlungsdetektor und der 1/r²-Abhängigkeit der Strahlungsintensität schwierig ist. Dennoch erhält man eine Absolutmessung des Aschegehalts durch folgende - natürlich automatisierte - Vorgehensweise:
Aus den Verhältnissen der K_{α}-Peaks im Energiebereich unter 7,5 keV kennt man die Zusammensetzung der Asche, da in diesem Energiebereich die K_{α}-Linien der wesentlichen Aschebildner liegen. Man kann hieraus - gegebenenfalls unter Zuhilfenahme von Eichspektren - die mittlere Ordnungszahl der Asche bestimmen. Durch Analyse der rückgestreuten Kupfer-K_{α}-Linie, also durch die Bestimmung des Verhältnisses zwischen Compton- und Rayleigh-Rückstreuung, erhält man die mittlere Ordnungszahl der Probe. Da die mittlere Ordnungszahl der Kohle natürlich bekannt ist, erhält man aus diesen beiden Informationen den absoluten Aschegehalt. Für den Fall, dass die leichten Elemente, insbesondere Aluminium und Silizium, von großer Bedeutung sind, muss gegebenenfalls eine Abstandskompensation oder eine zeitliche Mittelung erfolgen.

In der Praxis wird man zur Erzielung der bestmöglichen Genauigkeit unter Zugrundelegung von Formeln, die sowohl die Compton- und Rayleigh-Streuung als auch die wichtigsten Intensitäten der Fluoreszenzlinien enthalten, produkt- und gerätespezifisch kalibrieren.

Besonders vorteilhaft ist, dass man nur ein Spektrum benötigt, welches von nur einem Strahlungsdetektor gemessen wird. Hierdurch ist stets sichergestellt, dass die beiden Informationen, nämlich K_{α}-Emission und Streuung, von der selben geometrischen Stelle der Probe stammen und somit immer korrelieren.

Das gemessene Spektrum wird automatisch in der Auswerteeinheit 18 ausgewertet, in welche in der Regel auch entsprechende Referenz- oder Vergleichsspektren gespeichert sind.

Die Vorrichtung und das Verfahren wurden hier anhand der Online-Bestimmung des Aschegehalts eines Kohlestroms erläutert. Es sind jedoch auch andere Anwendungen möglich, beispielsweise die Offline-Bestimmung des Aschegehalts von Kohle, wobei beispielsweise nach entsprechender Probenvorbereitung die Kohleprobe als gepresste Pille vorliegt. Weiterhin ist insbesondere auch die Online-Bestimmumg des Aschegehalts von Papierbahnen möglich.

### Bezugszeichenliste

- 10: Förderband
- 12: Pflug
- 14: Röntgenröhre
- 16: Strahlungsdetektor
- 18: Auswerteeinheit

## Patentansprüche

1. Verfahren zur Schnell- oder Online-Bestimmung des Aschegehalts einer Substanz, nämlich von Kohle oder einer Papierbahnen, mit folgenden Schritten:
- Bestrahlen der Oberfläche der Substanz mit polychromatischer Röntgenstrahlung, wobei die Röntgenstrahlung im Energiebereich zwischen 1 und 30 keV einen oder mehrere Peaks im Kontinuum aufweist,
- Messen des Spektrums der von der Substanz rückgestreuten und emittierten Strahlung in einem Energiebereich zwischen 1 und 30 keV mit einer Auflösung von mindestens 250 eV,
- Auswerten des Spektrums, wobei zumindest die Intensitäten des elastisch rückgestreuten und des inelastisch rückgestreuten Peaks separat ermittelt werden und wobei die mittlere Ordnungszahl der Probe durch Bestimmung des Verhältnisses zwischen elastisch und inelastisch rückgestreutem Peak bestimmt wird,
**dadurch gekennzeichnet, dass** die Auswertung weiterhin folgende Schritte aufweist:
- Bestimmung der mittleren Ordnungszahl der Asche aus den Verhältnissen der K_{α}-Peaks im Energiebereich zwischen 1 und 7 keV um den Einfluß einer schwankenden Elementarzusammensetzung innerhalb der Asche zu kompensieren,
- Bestimmung des absoluten Aschegehalts unter Berücksichtigung der mittleren Ordnungszahl der Asche und der mittleren Ordnungszahl der Probe.

2. Verfahren nach Anspruch 1, **dadurch gekennzeichnet, daß** der Aschegehalt von Kohle bestimmt wird, die auf einer sich bewegenden Fördereinrichtung gefördert wird.

3. Verfahren nach Anspruch 1, **dadurch gekennzeichnet, dass** der Aschegehalt von Kohle bestimmt wird, wobei eine Probe der Kohle als gepresste Pille vorliegt.

4. Vorrichtung zur Durchführung des Verfahrens des Anspruchs 1 mit:
- einer Strahlungsquelle, nämlich einer Röntgenröhre, die mit einer Beschleunigungsspannung zwischen 10 und 50 kV betrieben wird und deren Anode aus Cu, Mo, Rh oder W besteht,
- einem in Rückstreuanordnung angeordneten Strahlungsdetektor, der im Energiebereich zwischen 1 und 30 keV empfindlich ist und eine Auflösung von mindestens 250 eV aufweist und
- einer Auswerteeinheit, die mit dem Strahlungsdetektor verbunden ist, wobei
- die Auswerteeinheit das Spektrum der von der Substanz elastisch und inelastisch rückgestreuten sowie emittierten Strahlung in einem Energiebereich zwischen 1 keV und 30 keV dadurch analysiert, dass sie
- die mittlere Ordnungszahl der Asche aus den Verhältnissen der K_{α}-Peaks im Energiebereich zwischen 1 und 7 keV bestimmt,
- die mittleren Ordnungszahl der Probe durch Bestimmung des Verhältnisses zwischen elastisch und inelastisch rückgestreutem Peak bestimmt und
- den absoluten Aschegehalt unter Berücksichtigung der mittleren Ordnungszahl der Asche und der mittleren Ordnungszahl der Probe bestimmt.

## Claims

1. Process for fast or on-line determination of the ash content of a substance, namely of coal or a paper web, with the following steps:
- Irradiating the surface of the substance with polychromatic X-ray radiation, wherein the X-ray radiation exhibits in the energy range from 1 to 30 keV one or more peaks in the continuum,
- measuring the spectrum of the radiation backscattered and emitted by the substance in an energy range between 1 and 30 keV, with a resolution of at least 250 eV,
- analysing the spectrum, wherein at least the intensities of the elastically backscattered and the inelastically backscattered peak are separately determined, and wherein the mean atomic number of the sample is determined by the determination of the ratio between the elastically and the inelastically backscattered peak,
**characterized in that** the analysis further comprises the following steps:
- Determination of the mean atomic number of the ash from the ratios of the Kα peaks in the energy range between 1 and 7 keV, in order to compensate for the influence of a fluctuating elemental composition within the ash,
- determination of the absolute ash content, taking into account the mean atomic number of the ash and the mean atomic number of the sample.

2. Process according to claim 1, **characterized in that** the ash content of coal being conveyed on a moving conveyor device is determined.

3. Process according to claim 1, **characterized in that** the ash content of coal is determined, wherein a sample of the coal is present as a pressed pellet.

4. Device for carrying out the process according to claim 1, with:
- A radiation source, namely an X-ray tube, which is operated at an accelerating voltage of between 10 and 50 kV, and the anode of which consists of Cu, Mo, Rh or W,
- a radiation detector arranged in backscatter arrangement, which is sensitive in the energy range between 1 and 30 keV and exhibits a resolution of at least 250 eV, and
- an analysis unit which is connected to the radiation detector, wherein
- the analysis unit analyses the spectrum of the radiation backscattered and emitted by the substance in an energy range between 1 and 30 keV, in that it
- determines the mean atomic number of the ash from the ratio of the Kα peaks in the energy range between 1 and 7 keV,
- determines the mean atomic number of the sample by determination of the ratio between elastic and inelastic backscattered peak, and
- determines the absolute ash content, taking account of the mean atomic number of the ash and the mean atomic number of the sample.

## Revendications

1. Procédé pour la détermination en ligne ou rapide de la teneur en cendres d'une substance, c'est-à-dire de charbon ou de bandes de papier, comprenant les étapes suivantes :
- Irradier la surface de la substance par un rayonnement X polychromatique qui présente dans le domaine d'énergie entre 1 et 30 keV un ou plusieurs pics dans le continuum,
- Mesurer le spectre du rayonnement émis et rétrodiffusé par la substance dans un domaine d'énergie entre 1 et 30 keV avec une résolution d'au moins 250 eV,
- Evaluer le spectre, au moins les intensités du pic rétrodiffusé inélastiquement et du pic rétrodiffusé élastiquement étant détectées séparément, et le numéro atomique moyen de l'échantillon étant déterminé par la détermination du rapport entre pic rétrodiffusé inélastiquement et élastiquement,
**caractérisé en ce que** l'évaluation comporte en outre les étapes suivantes :
- Déterminer le numéro atomique moyen des cendres d'après les rapports des pics *K_{α}* dans le domaine d'énergie entre 1 et 7 keV afin de compenser l'influence d'une composition élémentaire fluctuante à l'intérieur des cendres,
- Déterminer la teneur absolue en cendres en considérant le numéro atomique moyen des cendres et le numéro atomique moyen de l'échantillon.

2. Procédé selon la revendication 1, **caractérisé en ce qu'**on détermine la teneur en cendres de charbon transporté sur un dispositif transporteur en mouvement.

3. Procédé selon la revendication 1, **caractérisé en ce qu'**on détermine la teneur en cendres de charbon, un échantillon de charbon étant présent sous forme d'une pastille compressée.

4. Dispositif pour la mise en oeuvre du procédé selon la revendication 1 comprenant :
- Une source de rayonnement, c'est-à-dire un tube à rayons X qui fonctionne avec une tension d'accélération comprise entre 10 et 50kV et dont la l'anode est constituée de Cu, Mo, Rh ou W,
- Un détecteur de rayonnement agencé en agencement à rétrodiffusion, qui est sensible dans le domaine d'énergie compris entre 1 et 30 keV et présente une résolution d'au moins 250 eV et
- Une unité d'évaluation qui est reliée au détecteur de rayonnement, dans lequel
- L'unité d'évaluation analyse le spectre du rayonnement aussi bien émis que rétrodiffusé, inélastiquement et élastiquement par la substance dans un domaine d'énergie compris entre 1 keV et 30 keV, en ce qu'il
- détermine le numéro atomique moyen des cendres d'après les rapports des pics *K_{α}* dans le domaine d'énergie compris entre 1 et 7 keV,
- détermine le numéro atomique moyen de l'échantillon par la détermination du rapport entre pic rétrodiffusé inélastiquement et élastiquement et
- détermine la teneur absolue en cendres en considérant le numéro atomique moyen des cendres et le numéro atomique moyen de l'échantillon.
